Europäisches Patentamt

European Patent Office

Office européen des brevets

(11) Veröffentlichungsnummer : **0 082 301**
**B1**

(12) **EUROPÄISCHE PATENTSCHRIFT**

(45) Veröffentlichungstag der Patentschrift :
07.08.85

(51) Int. Cl.⁴ : **B 01 D 3/18**, C 07 C 67/08

(21) Anmeldenummer : 82110505.3

(22) Anmeldetag : 13.11.82

(54) Reaktionskolonne und deren Verwendung.

(30) Priorität : 21.11.81 DE 3146142

(43) Veröffentlichungstag der Anmeldung :
29.06.83 Patentblatt 83/26

(45) Bekanntmachung des Hinweises auf die Patenterteilung : 07.08.85 Patentblatt 85/32

(84) Benannte Vertragsstaaten :
AT BE CH DE FR IT LI NL SE

(56) Entgegenhaltungen :
DE-A- 2 516 553
DE-B- 1 937 521
DE-B- 2 503 195
US-A- 2 778 621
US-A- 3 294 379
US-A- 3 712 595

(73) Patentinhaber : Henkel Kommanditgesellschaft auf
Aktien
Postfach 1100 Henkelstrasse 67
D-4000 Düsseldorf-Holthausen (DE)

(72) Erfinder : Bremus, Norbert
Turmstrasse 21
D-4018 Langenfeld (DE)
Erfinder : Jeromin, Lutz, Dr.
Am Bandsbusch 88
D-4010 Hilden (DE)
Erfinder : Peukert, Eberhard
Dürerweg 15
D-4010 Hilden (DE)

## Beschreibung

Gegenstand der Erfindung ist eine Reaktionskolonne für geringe Dampfbelastung mit einem oder mehreren Glockenböden mit Tauchglocken, deren Flanken- bzw. Seitenränder Öffnungen oder Einschnitte zum Durchtritt der gasförmigen Phase aufweisen, einem oder mehreren abgetauchten Zuläufen, einem oder mehreren Abläufen und gegebenenfalls Zulauf- und Ablaufwehren.

Die Kolonne gemäß der Erfindung kann für die verschiedensten Reaktionen eingesetzt werden, bei denen eine geringe Dampfbelastung in der Kolonne auftritt. Insbesondere betrifft die Erfindung aber auch noch die Verwendung der nachfolgend im einzelnen definierten Reaktionskolonne zur kontinuierlichen katalytischen Veresterung von Carbonsäuren mit Alkoholen.

Kolonnen mit einem oder mehreren Glockenböden sind seit Jahrzehnten bekannt und werden in großem Umfang eingesetzt.

Ein wesentliches Merkmal dieser Glockenböden ist, daß die im Kolonnenboden vorhandene Öffnung, über die die Glocke angeordnet ist, im wesentlichen den gleichen Querschnitt aufweist wie die darüber angeordnete Glocke. Man kann dies auch so definieren, daß Dampfhalsquerschnitt, Ringspalt zwischen Dampfhals und Glocke sowie die Summe der Dampfaustrittsschlitze praktisch den gleichen Flächen inhalt aufweisen.

Diese Glockenböden können bei Reaktionen und/oder Stoffaustauschen in der Kolonne, bei denen nur geringe Dampfbelastungen und gleichzeitig hohe Flüssigkeitsstände (Wehrhöhe) vorliegen, nicht eingesetzt werden, da sie durchregnen. Derartige Probleme treten z. B. auf bei Verfahren zur kontinuierlichen katalytischen Veresterung, insbesondere von Fettsäuren, wie sie in der DE-AS 25 03 195 beschrieben sind, sowie bei Umesterungsreaktionen, z. B. von Carbonsäuremethylestern mit Isopropanol oder bei der Veresterung von Glycerin mit Essigsäure zu Glycerintriacetat.

Unter dem Begriff « geringe Dampfbelastungen » werden im Sinne der Erfindung solche Dampfbelastungen verstanden, die um den Faktor 5 bis 20, vorzugsweise etwa 10 bis 15, geringer sind, als die unteren üblichen Dampfbelastungen auf Rektifizierböden. Es handelt sich also in der Praxis um Dampfbelastungen, ausgedrückt durch die vergleichbare Luftgeschwindigkeit, bezogen auf den freien Kolonnenquerschnitt, im Bereich von etwa 0.05 bis 0.3, vorzugsweise 0.07 bis 0.2 m/s.

Zur Lösung dieser Probleme ist aus der DE-AS 25 3 195 eine Vorrichtung bekant, bei der die innere Glocke von Doppelglockenbodenkolonnen mit einer Bohrung versehen ist. Diese Konstruktion hat sich jedoch als verhältnismäßig umständlich erwiesen. Außerdem kann sie Anlaß geben zu Verstopfungen, wenn während der Verwendung der Kolonne sich darin irgendwelche in den zugeführten Strömen in geringer Menge enthaltene Produkte anreichern, die sich in den verhältnismäßig engen Zwischenräumen zwischen den beiden Glocken aufbauen. Dies ist z. B. der Fall bei irgendwelchen Crackprodukten, die bei der Veresterung von Fettsäuren mit Alkoholen mit den überhitzten Alkoholdämpfen in die Kolonne eingetragen werden können. Die Doppelglocke kann sich zusetzen, so daß die Kolonne staut.

Der vorliegenden Erfindung liegt die Aufgabenstellung zugrunde eine Kolonne zu schaffen, die eine einfache Konstruktion aufweist und die oben beschriebenen Nachteile zumindest weitgehend nicht aufweist bzw. bei der Verwendung die genannten Störungen zumindest weitgehend vermeidet.

Gegenstand der vorliegenden Erfindung ist demgemäß eine Reaktionskolonne für geringe Dampfbelastung mit einem oder mehreren Glockenböden mit Tauchglocken, deren Flanken- bzw. Seitenränder Öffnungen oder Einschnitte zum Durchtritt der gasförmigen Phase aufweisen, einen oder mehreren abgetauchten Zuläufen, einem oder mehreren Abläufen und gegebenenfalls Zulauf- und Ablaufwehren, die dadurch gekennzeichnet ist, daß die Kolonne einen inneren Durchmesser von 500 bis 3 000 mm aufweist, eine oder mehrere Drosselöffnungen 4 unter jeder Glocke 2 aufweist, deren Öffnungen im Boden 1 derart ausgebildet sind, daß der unter den Bedingungen des jeweiligen Betriebs der Kolonne auftretende trockene Druckverlust mindestens 15 mal und höchstens 60 mal so groß ist wie der Druckunterschied zwischen dem Druck der Flüssigkeitssäule 13 am Ablauf und dem Druck der Flüssigkeitssäule 12 am Zulauf.

Wie bereits dargelegt, kann die Reaktionskolonne der Erfindung für die verschiedensten Reaktionen eingesetzt werden, wie später noch erläutert wird.

Besonders vorteilhaft kann die Kolonne gemäß der Erfindung jedoch verwendet werden für die kontinuierliche katalytische Veresterung von Fettsäuren mit Alkoholen im Gegenstrom in flüssiger Phase, ähnlich wie sie in der DE-AS 25 03 195 beschrieben ist.

Die Tauchglocken der Kolonne gemäß der Erfindung entsprechen dem Stand der Technik und weisen die üblichen Öffnungen oder Einschnitte zum Durchtritt der gasförmigen Phase auf. Die gesamte von den Glocken auf einem Boden eingenommene Fläche beträgt dabei zweckmäßig 5 bis 40 %, bezogen auf den freien Volumenquerschnitt, abzüglich der durch Zulauf und Ablauf eingenommenen Fläche. Die Kolonne enthält in der Regel, wie gemäß dem Stand der Technik, mindestens 5 Böden. Technische Kolonnen enthalten in der Regel mindestens 20, vorzugsweise mindestens 25 Böden. Die obere Grenze kann bei 100 Böden, vorzugsweise bei 80 Böden liegen.

Das Verhältnis der Dampfdurchtrittsfläche durch die auf einen Boden aufgesetzten Glocken zum freien Kolonnenquerschnitt wird zweckmäßig im Bereich von 0.3 bis 6 %, vorzugsweise im Bereich von 2 bis 5 %, aufgeteilt. Zweckmäßig wird dies auf mindestens je 4 Öffnungen oder Einschnitte pro Glocke zum Durchtritt der gasförmigen Phase verteilt. In technischen Glocken liegen etwa 10 bis 20, vorzugsweise etwa 12 bis 18 Öffnungen oder Einschnitte pro Glocke vor.

Diese Öffnungen sind als Bohrungen ausgeführt und weisen zweckmäßig einen Durchmesser von 2 bis 5 mm auf, oder sie sind als Schlitze ausgeführt, die gleichmäßig am Umfang verteilt sind und einen Querschnitt aufweisen, der im wesentlichen dem Querschnitt der oben erwähnten Bohrungen entspricht. Die Bohrungen befinden sich zweckmäßig in etwa 5 bis 10 mm Höhe über dem Boden ; Schlitze beginnen in der Regel am unteren Rand der Glocke, oder 3 bis 10 mm darüber.

Ein wesentliches Merkmal der Erfindung ist, daß die Böden einen Durchmesser von 500 bis 3 000 mm aufweisen. Bei Böden mit einem geringeren Durchmesser treten die Probleme, die eingangs erwähnt wurden, nicht besonders stark auf. Böden mit größeren Durchmessern werden in der Praxis kaum eingesetzt. Bevorzugt liegt die untere Grenze bei etwa 800 mm, besonders bevorzugt bei etwa 900 mm. Die obere Grenze für den Durchmesser wird praktisch von der Festigkeit des Materials des Kolonnenmantels begrenzt und liegt bei dem jetzt in Frage kommenden Durch sätzen zweckmäßig bei etwa 2 000 mm, bevorzugt bei 1 700 mm und besonders bevorzugt bei 1 500 mm.

Jeder Boden weist einen oder mehrere abgetauchte Zuläufe auf, einen oder mehrere Abläufe sowie gegebenenfalls Zulauf- und Ablaufwehre und gegebenenfalls Vorrichtungen zur Beheizung. In der Praxis werden in der Regel über die Höhe des Ablaufwehres Flüssigkeitsstände von etwa 80 bis 500 mm, vorzugsweise von mindestens etwa 100, besonders bevorzugt mindestens etwa 120 mm eingesetzt. Die Obere Grenze für den Flüssigkeitsstand liegt zweckmäßig bei 400 mm. besonders bevorzugt bei etwa 300 und noch stärker bevorzugt bei etwa 200 mm.

Beim Betrieb derartiger Kolonnen bildet sich ein Flüssigkeitsgradient zwischen Zulauf (gegebenenfalls Zulaufwehr) und Ablauf (gegebenenfalls Ablaufwehr) aus. Dieser hängt von vielen Parametern ab, z. B. der Dichte der Flüssigkeit, der Viskosität der Flüssigkeit und der Flüssigkeitsbelastung (Volumenstrom bezogen auf die Wehrbreite). In jedem Fall ist der Flüssigkeitsgradient jedoch ein beim Betrieb einer Kolonne unter gegebenen Bedingungen sich einstellender Wert, der gemessen werden kann. Er bewirkt, daß der Flüssigkeitsstand am Zulauf höher ist als am Ablauf. Der Unterschied in der Flüssigkeitshöhe am Zulauf und Ablauf hat bei Kolonnen der oben beschriebenen Art ein solches Ausmaß, daß sich am Boden ein Unterschied im hydraulischen Druck von 0.1 bis 2, vorzugsweise von 0.5 bis 1.5 mbar pro Meter Entfernung zwischen Zulauf und Ablauf einstellt. Diesen Druckunterschied kann man wie folgt messen : Man betreibt die Kolonne mit verschlossenen Glocken hinsichtlich der Flüssigkeitsbelastung unter Bedingungen, unter denen die Reaktion oder der Stoffaustausch durchgeführt werden soll. Der Einfachheit halber verwendet man hierfür als Vorrichtung einen Modellboden, der den Böden in der tatsächlich verwendeten Kolonne entspricht, und der bei Umgebungstemperatur und -druck, d. h. bei etwa 25 °C und Atm.-Druck betrieben wird und nach oben offen ist, so daß der Flüssigkeitsstand an den genannten Stellen einfach gemessen werden kann. Da diese Messung hinsichtlich Temperatur und Druck also nicht unter den Bedingungen durchgeführt wird, unter denen die Kolonne später im jeweiligen Fall betrieben wird, muß der Modellversuch unter Verwendung solcher Flüssigkeiten und Flüssigkeitsbelastungen durchgeführt werden, die unter Anwendung der Ähnlichkeitslehre (hauptsächlich der Reynolds-Analogie) errechnet werden aus den Betriebsbedingungen beim späteren beabsichtigten Betrieb der Kolonne. Es kann dabei erforderlich sein, im Modellversuch auch andere Temperaturen als Umgebungstemperatur und andere Flüssigkeiten als Wasser anzuwenden. Der so ermittelte Wert entspricht hinsichtlich der praktischen Bedürfnisse der Erfindung dem dann beim tatsächlichen Betrieb der Kolonne auftretenden Wert. Man kann aber auch in die tatsächlich betriebene technische Kolonne geeignete Vorrichtungen zur Messung der Flüssigkeitshöhen an den genannten Stellen einbauen.

Ein wesentliches Merkmal der Erfindung liegt nun darin, daß unter jeder Glocke Drosselöffnungen ausgebildet sind, die einen sogenannten trockenen Druckverlust beim Durchströmen des Bodens bewirken. Diesen trockenen Druckverlust kann man wie folgt messen : Man verstopft in einem Modellboden, wie er oben beschrieben wurde, das Ablaufrohr. Bei einer vergleichbaren Luftgeschwindigkeit, wie sie der Dampfbelastung beim Betrieb der Kolonne entspricht, wird von unten durch den Modellboden ein Luftmassenstrom gedrückt. Auf dem Boden befindet sich keine Flüssigkeit. Die Druckdifferenz zwischen dem Luftdruck unmittelbar unter und unmittelbar über dem Boden ist der trockene Druckverlust. Auch bei diesem Modellversuch entspricht der so ermittelte trockene Druckverlust ausreichend genau dem beim tatsächlichen Betrieb der Kolonne auftretenden Druckverlust im Betriebszustand.

Eine wesentliche Lehre der Erfindung besteht darin, daß dieser trockene Druckverlust 15 bis 60 mal so groß sein muß wie der hydraulische Druckunterschied aufgrund des Flüssigkeitsgradienten.

Man testet auf diese Weise Kolonnenböden mit verschiedenen Drosselöffnungen und ermittelt die jeweils zutreffende Größe der Drosselöffnungen für den speziellen Anwendungsfall. Durch Serienmessungen kann man Diagramme mit den in Rede stehenden Parametern aufstellen, so daß dann zukünftige Messungen entfallen können. Es kann dann für einen bestimmten erwünschten Anwendungsfall aus sogenannten Druckverlust-Charakteristiken die entsprechende Drosselbohrung ermittelt werden.

Bevorzugt beträgt der trockene Druckverlust mindestens das 20fache, und besonders bevorzugt mindestens das 25fache des genannten hydraulischen Druckunterschieds. Maximal beträgt der trockene Druckverlust bevorzugt das 50fache, besonders bevorzugt das 35fache des hydraulischen Druckunterschieds. Auf jeden Fall muß der trockene Druckverlust so gewählt werden, daß ein Durchregnen der Kolonne in jedem Bereich verhindert wird. Bei manchen Reaktionen oder Stoffaustausch prozessen kann jedoch die Dampfbelastung am Kopf der Kolonne stark abweichen von derjenigen im unteren Bereich, und zwar aufgrund der unterschiedlichen mittleren Molekulargewichte der in der Dampfphase vorliegenden Stoffe. In einem solchen Fall kann es erforderlich sein, daß im oberen Bereich der Kolonne die Drosselbohrungen eine andere Größe aufweisen als im unteren Bereich, um ein Durchregnen in allen Bereichen der Kolonne zu verhindern. Aus energetischen Gründen sollte der trockene Druckverlust so niedrig wie möglich gehalten werden, natürlich aber so hoch sein, daß ein Durchregnen der Böden vermieden wird.

Die Form des Querschnitts der Drosselbohrungen kann in weiten Bereichen schwanken. Aus Gründen der einfachen Herstellung werden in der Regel kreisrunde Bohrungen zweckmäßig sein. Es ist aber möglich, auch andere geometrische Formen, z. B. Quadrate oder Rechtecke für die Öffnungen vorzusehen.

Es ist außerordentlich überraschend, daß durch diese verblüffend einfache Konstruktion z. B. Veresterungsreaktionen bei hohen Raum/Zeit-Ausbeuten durchgeführt werden können, ohne daß Störungen beim Betrieb der Kolonne auftreten oder diese durchregnet. Die Kosten für die Herstellung eines Bodens gemäß der Erfindung sind aufgrund der einfacheren Konstruktion naturgemäß erheblich geringer als der Böden, wie sie in der eingangs erwähnten DE-AS 25 03 195 beschrieben sind.

Gegenstand der Erfindung ist weiterhin die Verwendung der oben beschriebenen Kolonne zur kontinuierlichen katalytischen Veresterung von aliphatischen Carbonsäuren mit 2 bis 24 Kohlenstoffatomen mit Alkoholen im Gegenstrom in flüssiger Phase. Nach einer Ausführungsform können aliphatische Carbonsäuren mit 2 bis 6, vorzugsweise 2 bis 4 Kohlenstoffatomen, mit aliphatischen Alkoholen mit 2 bis 4 Hydroxylgruppen verestert werden. Ein technisch besonders wichtiges Beispiel hierfür ist die Veresterung der Essigsäure mit Glyzerin. Nach einer anderen Ausführungsform werden Fettsäuren mit 6 bis 24 Kohlenstoffatomen mit aliphatischen einwertigen Alkoholen mit 1 bis 6 Kohlenstoffatomen verestert. Es handelt sich hierbei um die üblichen Veresterungen in der Fettchemie. Beispiele für solche Fettsäuren sind Talgfettsäuren, Kokosfettsäuren, Sojaölfettsäuren, Palmfettsäuren und sonstige Fettsäuren und deren Gemische pflanzlicher und tierischer Herkunft. Als Alkohole haben besonders technische Bedeutung Methanol, Äthanol, n- und Iso-Propsanol, n-Butanol und gegebenenfalls die Isomeren.

Die Kolonne gemäß der Erfindung kann auch für Umesterungsreaktionen, z. B. Myristinsäuremethylester mit Iso-Propanol zu Isopropylmyristat eingesetzt werden. Weitere Beispiele hierfür sind die Umesterungen von tierischen und pflanzlichen Fetten und Ölen mit den oben genannten niedrigen Alkoholen zu den entsprechenden Estern.

Die Kolonne kann auch eingesetzt werden zur Absorbtion von bestimmten Verbindungen aus Gasgemischen an geeignete (Wasch)flüssigkeiten, z. B. die Absorbtion von Schwefeldioxyd in alkalische Waschflüssigkeiten.

Figur 1 ist ein Längsschnitt durch einen Boden der Reaktionskolonne.

Figur 2 ist ein Längsschnitt durch eine einzelne Glocke.

Figur 3 ist eine Prinzipskizze zur Darstellung der Messung des hydraulischen Druckunterschieds.

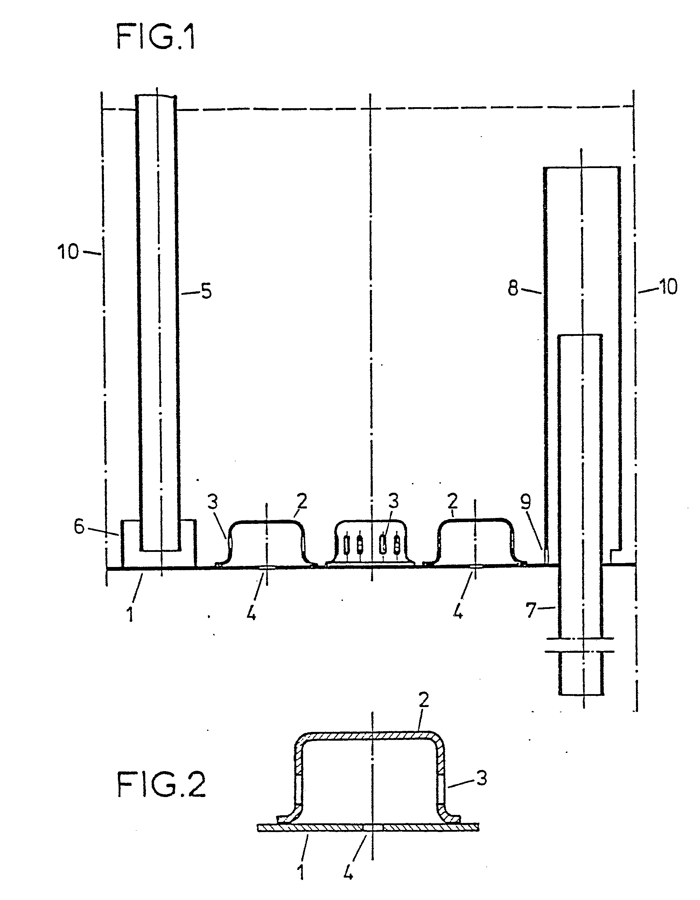

In der Fig. 1 sind auf dem Boden 1 Glocken 2 angeordnet, die an ihrem Umfang verteilt Dampfdurchtrittsöffnungen in Form von Schlitzen 3 aufweisen. Unter den Glocken befinden sich Drosselöffnungen 4. Das Zulaufrohr 5 ist in einer Tauchtasse 6 abgetaucht. In diesem Fall wirkt die Tauchtasse 6 als Zulaufwehr. Es kann aber auch zwischen der Tauchtasse 6 und der ersten Glocke ein spezielles Zulaufwehr in an sich bekannter Weise angeordnet sein, was in der Zeichnung jedoch nicht dargestellt ist. Um das Ablaufrohr 7 ist ein Ablaufwehr 8 angeordnet, das in diesem speziellen Fall so ausgebildet ist, daß es konzentrisch das Ablaufrohr umgibt und einen Spritzschutz darstellt. Am unteren Teil des Ablaufwehrs 8 sind Öffnungen 9 zum Durchtritt der Flüssigkeit angeordnet. Der Flüssigkeitsstand am Ablaufrohr 7 wird durch dessen Höhe bestimmt. Die Tauchtasse 6 weist in der Praxis noch Öffnungen für eine mögliche Entleerung beim Abfahren der Kolonne auf, die jedoch der Einfachheit halber nicht in der Zeichnung dargestellt sind. Die Kolonnenwand ist schematisch als punktierte Linie 10 dargestellt.

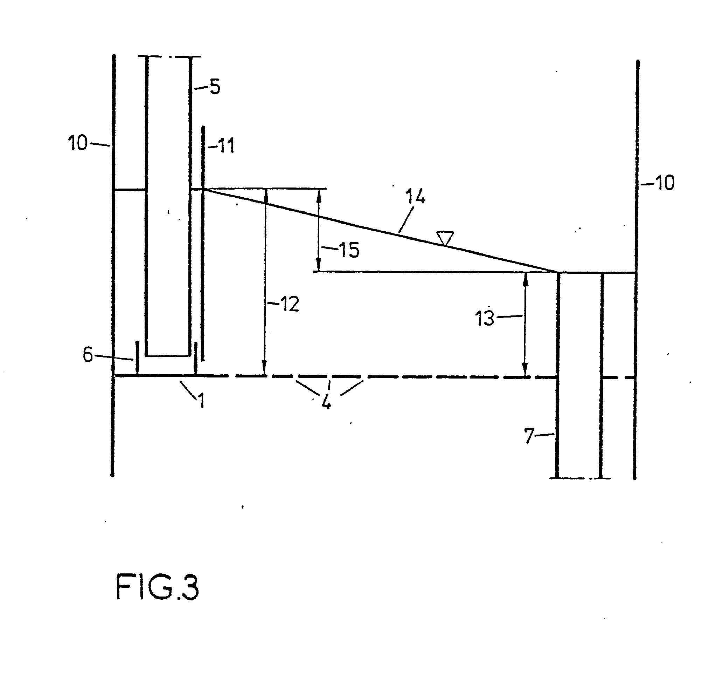

In Fig. 2 sind die gleichen Bezugszahlen zur Kennzeichnung der gleichen Teile verwendet.

Die Messung des Druckunterschieds wird anhand der Fig. 3 erläutert. Der Kolonnenboden 1 ist nur schematisch dargestellt, d. h. die darauf befindlichen Glocken sind nicht mit eingezeichnet. Es sind lediglich die Drosselöffnungen 4 angedeutet. Die Anordnung weist ein Zulaufrohr 5 mit Tauchtasse 6 und ein Ablaufrohr 7 auf. Am Zulaufrohr ist ein Zulaufwehr 11 angeordnet. Aus Gründen der einfachen Darstellung wurde am Ablaufrohr ein Ablaufwehr nicht eingezeichnet. Der Flüssigkeitsstand oder die Flüssigkeitssäule 12 am Zulaufwehr ist größer als der Flüssigkeitsstand oder die Flüssigkeitssäule 13 am Ablaufrohr. Der Flüssigkeitsspiegel 14 weist deshalb einen Gradienten auf, und die Differenz zwischen dem Flüssigkeitsstand 12 und dem Flüssigkeitsstand 13 ist mit 15 bezeichnet. Aus ihm läßt sich der Druckunterschied zwischen dem Druck der Flüssigkeitssäule am Ablauf und dem Druck der Flüssigkeitssäule am Zulaufwehr ausrechnen. Wenn kein Zulaufwehr 11 vorhanden ist, muß entsprechend der Flüssigkeitsstand direkt am Zulaufrohr 5 gemessen werden. Sinngemäß gilt dies umgekehrt für den Fall, daß ein Ablaufwehr vorhanden ist.

Beispiel 1

Unter Verwendung einer Reaktionskolonne mit 32 Böden, bei denen die oberen 15 durch Rohrschlangen auf den Böden beheizbar ausgeführt sind, einer Höhe von 11 m, einem Bodendurchmesser von 1 100 mm, 70 Glocken pro Boden, einem Zulauf und einem Ablauf und einem Zulaufwehr und einem Ablaufwehr, wobei die Ablaufwehrhöhe 150 mm und der Abstand zwischen Zulauf- und Ablaufwehr 785 mm beträgt, wird ein Veresterungsverfahren betrieben. Die von den Glocken auf einem Boden angenommene Fläche beträgt dabei 17 % der Fläche des Bodens zwischen den beiden Wehren ; dies Verhältnis der Dampfdurchtrittsfläche (Schlitze) durch die auf einen Boden aufgesetzten Glocken bezogen auf den freien Kolonnenquerschnitt beträgt 3.5 %. Speist man auf den obersten Boden der Kolonne 3 960 kg/h eines Talgfettsäuregemisches der Säurezahl SZ = 200, das einen üblichen Katalysator enthält, mit einer Temperatur von 250 °C und unterhalb des untersten Bodens einen Methanolmassenstrom von 1 040 kg/h gasförmig bei einer Temperatur von ebenfalls 250 °C bei einem Druck in der Kolonne von 11 bar ein, so erhält man im Sumpf der Kolonne Methylester der der Fettsäure entspsrechenden Menge mit einer Säurezahl unter 0.5 und am Kopf der Kolonne ein der Umsetzung und dem Methanolüberschuß entsprechendes Wasser/Methanolgemisch in gasförmiger Form. Der mit einem Modellboden in Originalgröße an einem Bodenversuchsstand mit Wasser ermittelte Flüssigkeitsgradient beträgt 0.13 mbar/m. Die Drosselöffnungen wurden so gewählt, daß der trockene Druckverlust das 30-fache des Druckunterschiedes zwischen Zulauf- und Ablaufwehr aufgrund des gemessenen Flüssigkeitsgradienten beträgt. Mit der geometrischen Form einer kreisrunden Drosselöffnung beträgt der Durchmesser dieser Drosselöffnungen 10 mm$^{\varnothing}$. Die beschriebene Wahl der Größe der drosselöffnungen bewirkt, daß die Kolonne einwandfrei arbeitet, d. h. weder am Kopf noch im unteren Bereich durchregnet.

Beispiel 2

Unter Verwendung einer Reaktionskolonne mit 35 Böden der in Beispiel 1 beschriebenen Art, einer Höhe von 16 m, einem Bodendruchmesser von 1.1 m, einer Ablaufwehrhöhe von 150 mm erhält man bei der Veresterung von Glycerin mit Essigsäure einen Umsatz von 90 % bezogen auf das eingesetzte Glycerin. Dabei werden 440 kg/h Glycerin bei einer Temperatur von 140 °C auf den obersten Boden mit einem üblichen Katalysator und unter dem untersten Boden 570 kg/h Essigsäure bei einer Temperatur von 150 °C gasförmig eingespeist. Die Kolonne hat einen Sumpfdruck, der nur wenig über Umgebungsdruck liegt. Während am Kopf der so betriebenen Kolonne 94 % des Reaktionswassers praktisch essigsäurefrei gasförmig abgezogen werden, kann am Sumpf der Kolonne zu 90 % umgesetztes Glycerin als Glycerinacetat entnommen werden, das mit der überschüssigen Essigsäure und ca. 6 % des Reaktionswassers vermischt ist. Der Flüssigkeitsgradient für Glycerin bei den Betriebsbedingungen beträgt 0.16 mbar/m. Es wurde das 25-fache des hydraulischen Druckunterschiedes zwischen Zulauf- und Ablaufwehr aufgrund des gemessenen Flüssigkeitsgradienten für den trockenen Druckverlust des Bodens aufgrund einer im Vergleich zu Beispiel 1 höheren vergleichbaren Luftgeschwindigkeit bezogen auf den freien Kolonnenquerschnitt als ausreichend angesehen. Der trockene Druckverlust von dann 3.1 mbar wird bei der angegebenen Gasbelastung mit einer kreisrunden Drosselöffnung von 11 mm$^{\varnothing}$ unter jeder Glocke erreicht. Die beschriebene Wahl der Größe der Drosselöffnungen bewirkt, daß die Kolonne einwandfrei arbeitet, d. h. weder am Kopf noch im unteren Bereich durchregnet.

In den Beispielen wurden Standardglocken mit einem Durchmesser von 50 mm (50-er Standardglocke) verwendet. Bei Einsatz von Glocken mit einem größeren Durchmesser würde sich bei gleichem Kolonnendurchmesser die Ansahl der Glocken verringern ; würde man anstatt der 50er Standardglocke eine 80er Glocke einsetzen, würde sich die Anzahl der Glocken auf 60 verringern. gleiche Strömungsbedingungen unter der Glocke würden eine Drosselbohrung von 12 mm $\varnothing$ erfordern. Bei Einsatz einer 125er Glocke würde sich die Anzahl der Glocken auf 30 verringern und die Drosselbohrung müßte einen $\varnothing$ 17 mm aufweisen.

Die Flächenverhältnisse zwischen der Projektionsfläche der Glocke und der Drosselöffnungsfläche, welche nicht konstant sind, können unter gewissen Vereinfachungen nach folgender Formel berechnet werden :

$$d_2 = n_1/n_2 \cdot d_1$$

$d_1$ : Drosselöffnungsdurchmesser bei Verwendung der Glocke vom Typ 1
$d_2$ : Drosselöffnungsdurchmesser bei Verwendung der Glocke vom Typ 2
$n_1, n_2$ : Anzahl der dann auf einem Boden von bestimmtem Durchmesser untergebrachten Glocken.

## Patentansprüche

1. Reaktionskolonne für geringe Dampfbelastung mit einem oder mehreren Glockenböden mit Tauchglocken, deren Flanken- bzw. Seitenränder Öffnungen oder Einschnitte zum Durchtritt der gasförmigen Phase aufweisen, einen oder mehreren abgetauchten Zuläufen, einem oder mehreren Abläufen und gegebenenfalls Zulauf- und Ablaufwehren, dadurch gekennzeichnet, daß die Kolonne einen inneren durchmesser von 500 bis 3 000 mm aufweist, eine oder mehrere Drosselöffnungen (4) unter jeder Glocke (2) aufweist, deren Öffnungen im Boden (1) derart ausgebildet sind, daß der unter den Bedingungen des jeweiligen Betriebs der Kolonne auftretende trockene Druckverlust mindestens 15 mal und höchstens 60 mal so groß ist wie der Druckunterschied zwischen dem Druck der Flüssigkeitssäule (13) am Ablauf und dem Druck der Flüssigkeitssäule (12) am Zulauf.

2. Verwendung der Reaktionskolonne nach Anspruch 1 zur kontinuierlichen katalytischen Veresterung von aliphatischen Carbonsäuren mit 2 bis 24 Kohlenstoffatomen mit Alkoholen im Gegenstrom in flüssiger Phase.

3. Verwendung nach Anspruch 2, dadurch gekennzeichnet, daß aliphatische Carbonsäuren mit 2 bis 6, vorzugsweise 2 bis 4 Kohlenstoffatomen, mit aliphatischen Alkoholen mit 2 bis 4 Hydroxylgruppen verestert werden.

4. Verwendung nach Anspruch 3, dadurch gekennzeichnet, daß Essigsäure mit Glycerin verestert wird.

5. Verwendung nach Anspruch 2, dadurch gekennzeichnet, daß Fettsäuren mit 6 bis 24 Kohlenstoffatomen mit aliphatischen einwertigen Alkoholen mit 1 bis 6 Kohlenstoffatomen verestert werden.

## Claims

1. A reaction column for low vapor flow rates comprising one or more bubble plates with bubble caps of which the sides comprise openings or perforations for the throughflow of the gas phase, one or more submerged inlets, one or more outlets and, optionally inflow and outflow weirs, characterized in that the column has an internal diameter of from 500 to 3 000 mm and one or more orifices (4) below each bubble cap (2) of which the openings in the plate (1) are designed in such a way that the dry pressure loss occurring under the particular conditions under which the column is operated is at least 15 times and at most 60 times as great as the pressure difference between the liquid head (13) at the outlet and the pressure of the liquid head (12) at the inlet.

2. The use of the reaction column as claimed in Claim 1 for the continuous catalytic esterification of aliphatic carboxylic acids containing from 2 to 24 carbon atoms with alcohols in countercurrent in the liquid phase.

3. The use claimed in Claim 2, characterized in that aliphatic carboxylic acids containing from 2 to 6 and preferably from 2 to 4 carbon atoms are esterified with aliphatic alcohols containing from 2 to 4 hydroxyl groups.

4. The use claimed in Claim 3, characterized in that acetic acid is esterified with glycerol.

5. The use claimed in Claim 2, characterized in that fatty acids containing from 6 to 24 carbon atoms are esterified with aliphatic monohydric alcohols containing from 1 to 6 carbon atoms.

## Revendications

1. Colonne de réaction pour charge de vapeur faible ayant un ou plusieurs plateaux à cloches avec des cloches à immersion dont les faces latérales ou les flancs présentent des ouvertues ou des fentes pour le passage de la phase gazeuse, une ou plusieurs entrées immergées, une ou plusieurs sorties et, éventuellement, des vannes d'entrée et de sortie, caractérisée par le fait que la colonne a un diamètre interne compris entre 500 et 3 000 mm, qu'elle présente une ou plusieurs ouvertures à étranglement (4) sous chaque cloche (2) où les ouvertures dans le plateau (1) ont une configuration telle que la perte de pression sèche qui se produit dans les conditions d'opérations respectives est au moins 15 fois et au plus 60 fois plus élevée que la différence de pression entre la pression de la colonne de liquide (13) à la sortie et la pression de la colonne de liquide (12) à l'arrivée.

2. Utilisation de la colonne de réaction selon la revendication 1 pour l'estérification catalytique continue d'acides carboxyliques aliphatiques ayant de 2 à 24 atomes de carbone avec des alcools, à contre-courant en phase liquide.

3. Utilisation selon la revendication 2, caractérisée par le fait que l'on estérifie des acides carboxyliques aliphatiques ayant de 2 à 6, préférablement de 2 à 4 atomes de carbone avec des alcools aliphatiques ayant de 2 à 4 groupes hydroxyle.

4. Utilisation selon la revendication 3, caractérisée par le fait que l'on estérifie l'acide acétique avec du glycérol.

5. Utilisation selon la revendication 2, caractérisée par le fait que l'on estérifie des acides gras ayant de 6 à 24 atomes de carbone avec des alcools aliphatiques monovalents ayant de 1 à 6 atomes de carbone.

FIG.1

FIG.2

1

FIG.3